# EUROPÄISCHE PATENTSCHRIFT

(11) **EP 2 752 108 B1**
(45) Veröffentlichungstag und Bekanntmachung des Hinweises auf die Patenterteilung: **27.02.2019**
(21) Anmeldenummer: 13192654.5
(22) Anmeldetag: 13.11.2013
(51) Int. Cl.: A01F 12/28, A01F 12/26

(54) **Dreschvorrichtung**
Threshing device
Dispositif de battage

(30) Priorität: 04.01.2013 DE 102013100057
(43) Veröffentlichungstag der Anmeldung: 09.07.2014
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Esken, Dirk, 59494 Soes-Meckingsen (DE); Krieft, Manfred, 33428 Harsewinkel (DE); Buddenkotte, Franz, 33428 Harsewinkel (DE); Bußmann, Ralf, 48336 Sassenberg (DE)
(74) Vertreter: CLAAS Gruppe

(56) Entgegenhaltungen:
- EP-A1- 0 468 160
- EP-A1- 0 745 317
- EP-A1- 1 374 662
- EP-A1- 2 481 277

## Beschreibung

Die vorliegende Erfindung betrifft eine Dreschvorrichtung gemäß dem Oberbegriff des Anspruches 1.

Eine Drescheinrichtung der eingangs genannten Art ist aus der EP 0 745 317 A1 bekannt. Die EP 0 745 317 A1 beschreibt eine Drescheinrichtung, die nach dem Tangentialflussprinzip arbeitet und die aus mindestens zwei hintereinander angeordneten, gleichsinnig angetriebenen Dreschtrommeln und diesen zugeordneten Dreschkörben besteht. Der erste Dreschkorb, der die erste Dreschtrommel umschließt, ist in seinem der zweiten Dreschtrommel zugewandten Bereich abgewinkelt und weist dort eine als Reib- oder Dreschelement ausgeführte Erntegutbearbeitungseinrichtung auf, die verstellbar im Rahmen des ersten Korbes gelagert ist. Die Dreschkörbe sind durch eine Hebelanordnung in radialer Richtung der der Dreschtrommeln verstellbar, wodurch der Korbspalt veränderbar ist, was der Anpassung an unterschiedlich zu verarbeitende Erntegutarten dient. Während der erste Dreschkorb parallel zu sich selbst verstellbar ist, ist der zweite Dreschkorb an seinem dem ersten Dreschkorb abgewandten Ende drehbar gelagert. Hierdurch wird bei einer gemeinsamen Verstellung des Abstandes der beiden Dreschkörbe zu der ersten und zweiten Dreschtrommel eine gleichsinnige Veränderung des jeweiligen Einlaufspaltes an der ersten und zweiten Dreschtrommel erreicht. Hingegen zeichnet sich der Spaltverlauf zwischen der zweiten Dreschtrommel und dem diese abschnittsweise umschlingenden ersten Dreschkorb und dem zweiten Dreschkorb bei der Verstellung des Dreschkorbabstandes mit zunehmendem Abstand zu den Dreschtrommeln durch einen zunehmend konvexen Verlauf aus. Das heißt, dass der Spaltverlauf vom Eingangsspalt zwischen dem ersten Dreschkorb und der zweiten Dreschtrommel zum Ausgangspalt zwischen dem zweiten Dreschkorb und der zweiten Dreschtrommel einen ungleichmäßigen, bauchförmigen Verlauf aufweist, der sich ungünstig auf den Gutfluss sowie die Qualität des Druschprozesses auswirkt.

Der Erfindung liegt die Aufgabe zu Grunde, eine Dreschvorrichtung der eingangs genannten Art derart weiterzubilden, dass diese sich durch eine höhere Druschqualität und einen besseren Gutfluss bei verschiedenen Erntegutarten auszeichnet.

Diese Aufgabe wird erfindungsgemäß durch die kennzeichnenden Merkmale des Anspruches 1 gelöst.

Vorteilhafte Weiterbildungen sind Gegenstand der auf den unabhängigen Anspruch 1 rückbezogenen Unteransprüche.

Gemäß Anspruch 1 wird vorgeschlagen, dass der erste Dreschkorb und der zweite Dreschkorb um eine gemeinsame, die Dreschkörbe verbindende Achse schwenkbar sind und dass die Umschlingung der zweiten Dreschtrommel durch den ersten Dreschkorb und den zweiten Dreschkorb annähernd gleich ist. Durch diese gegenüber dem Stand der Technik deutlich vergrößerte Umschlingung der zweiten Dreschtrommel durch den ersten Dreschkorb sowie die gemeinsame Achse, um die die Dreschkörbe schwenkbar sind, wird ein im Wesentlichen gleichmäßiger Korbspaltverlauf über das gesamte Verstellspektrum des Dreschkorbabstandes erzielt. Der aus dem Stand der Technik resultierende Effekt, dass der Spaltverlauf mit zunehmendem Abstand von Dreschkörben und Dreschtrommel zueinander von einem schmalen Eingangsspalt ausgehend sich in Umfangsrichtung aufweitet und anschließend sich wieder verjüngend in einem schmalen Ausgangspalt mündet, wird durch diese Ausbildung des ersten Dreschkorbes und des zweiten Dreschkorbes vermieden.

Vorteilhafterweise kann zumindest der erste Dreschkorb einen Rahmen aufweisen, in dem mindestens zwei Dreschkorbsegmente in Umfangsrichtung angeordnet sind, die zumindest teilweise auswechselbar sind. Diese Segmentierung des ersten Dreschkorbes hat den Vorteil, dass auf einfachste Weise unterschiedliche Kombinationen in der Ausführung der Dreschkörbe in Umschlingungsrichtung insbesondere der zweiten Dreschtrommel realisierbar sind. So kann beispielsweise im Eingangsbereich der zweiten Dreschtrommel ein Dreschkorbsegment mit einer feineren Lochung im ersten Dreschkorb zum Einsatz kommen als in dem durch den zweiten Dreschkorb gebildeten Ausgangsbereich. Ebenso ist eine Variation der zum Einsatz kommenden Dreschkorbtypen möglich, indem beispielsweise im Eingangsbereich der zweiten Dreschtrommel, der von dem ersten Dreschkorb umschlungen ist, ein Dreschkorbsegment mit Rundstäben eingesetzt wird, während in dem nachfolgenden von dem zweiten Dreschkorb umschlungenen Bereich ein Dreschkorbsegment mit Leisten vorsehbar ist. Diese Anordnung ist selbstverständlich auch umkehrbar. Eine beschränkte Austauschbarkeit von Dreschkorbsegmenten hätte den Vorteil, dass lediglich eine von zwei Varianten des zweiten Dreschkorbes, einer mit Rundstäben und einer mit Leisten, an den Rahmen fest montiert werden können, während die übrigen Dreschkorbsegmente in Abhängigkeit von Kundenbedürfnissen durch einen Austausch am ersten Dreschkorb anpassbar sind.

In vorteilhafter Weiterbildung kann vorgesehen sein, dass die Dreschkorbsegmente gegenüber dem Rahmen des ersten Dreschkorbes in radialer Richtung anhebbar und anschließend in axialer Richtung bewegbar sind. Hierdurch lässt sich ein einfacher Austausch der Dreschkorbsegmente erreichen, da diese in den Rahmen eingelegt werden. Diese Entnehmbarkeit der Dreschkorbsegmente ermöglicht es, dass die Wandung des Rahmens, im Gegensatz zu aus dem Stand der Technik bekannten Rahmen, eine durchgehende Höhe aufweist, wodurch dieser in sich formstabiler ist. Zudem verbleibt der Rahmen in seiner Position unterhalb der ersten und zweiten Dreschtrommel, wodurch eine höhere Stabilität der Dreschvorrichtung gegenüber einer Variante erreichbar ist, die das seitliche Herausziehen des gesamten Dreschkorbes aus einer Erntemaschine vorschlägt. Darüber hinaus lässt sich gegenüber bisherigen Dreschkorbsegmenten eine Gewichtsreduzierung der Dreschkorbsegmente verwirklichen, da die Grundfestigkeit der Dreschvorrichtung durch den in der Erntemaschine verbleibenden Korbrahmen erhalten bleibt.

Vorzugsweise können in axialer Richtung des ersten Dreschkorbes mindestens zwei auswechselbare Dreschkorbsegmente nebeneinander angeordnet sein. Hierdurch wird das Handling beim Auswechseln der Dreschkorbsegmente vereinfacht, das diese kleiner ausführbar sind und ein geringeres Gewicht aufweisen.

Zur Vereinfachung der Auswechselbarkeit der Dreschkorbsegmente können an dem Rahmen des ersten Dreschkorbes Gleitschienen angeordnet sein, die eine Führung des Dreschkorbsegmentes in axialer Richtung bei einem Hineinschieben oder Herausziehen ermöglichen.

Zudem können in dem Rahmen des ersten Dreschkorbes nutförmige Ausnehmungen und den darin aufgenommenen Dreschkorbsegmenten nutförmige Ausnehmungen versetzt zueinander angeordnet sein, die eine Zugänglichkeit mit einem geeigneten Werkzeug ermöglichen. Hierdurch kann ein Dreschkorbsegment in radialer Richtung gegenüber dem Rahmen des ersten Dreschkorbes angehoben werden, um es anschließend in axialer Richtung aus dem ersten Dreschkorb entnehmen zu können.

Die Fixierung der auswechselbaren Dreschkorbsegmente erfolgt vorzugsweise einseitig. Hierzu können an einer Seite des Rahmens Bolzen angeordnet sein, auf die das Dreschkorbsegment aufschiebbar ist, um es radial zu fixieren, während auf der gegenüberliegenden Rahmenseite Durchbohrungen angeordnet sind, die eine Fixierung des Dreschkorbsegmentes gegenüber dem Rahmen durch Verschrauben erlauben.

Des Weiteren kann der erste Dreschkorb zwei kreisbogenförmige Abschnitte aufweisen, die zueinander abgewinkelt angeordnet sind und einen keilförmigen Übergangsbereich zwischen den Abschnitten ausbilden. Dieser Übergangsbereich erstreckt sich in radialer Richtung zwischen der ersten und der zweiten Dreschtrommel und kann zu einer Beeinflussung des Dreschprozesses verwendet werden.

Hierzu kann die zumindest eine Erntegutbearbeitungseinrichtung als unterhalb des ersten Dreschkorbes vor dem Übergangsbereich einlegbare Entgrannerbleche ausgeführt sein. Entgrannerbleche kommen zur Anwendung, wenn es sich bei dem Erntegut um solche Getreide handelt, bei denen es notwendig ist, Reibung über eine relativ enge Korbstellung zu erzeugen, wie zum Beispiel bei Gerste, bei der die Grannen durch Reibung entfernt werden. Der Vorgang der Entgrannung wird im Wesentlichen durch die Reibwirkung in der Strohmatte zwischen dem Dreschkorb und der Dreschtrommel erzeugt. Der Reibeinfluss wird dagegen wiederum wesentlich durch den Korbspalt oder die Dreschtrommeldrehzahl beeinflusst.

Weiterhin kann die zumindest eine Erntegutbearbeitungseinrichtung als zusätzlich hinter dem Übergangsbereich in den kreisbogenförmigen Abschnitt unterhalb des ersten Dreschkorbes einlegbare Entgrannerbleche ausgeführt sein. Auf Grund der flexiblen Ergänzung durch zusätzliche Entgrannerbleche im Eingangsbereich der zweiten Dreschtrommel lässt sich bei Bedarf eine mehrstufige Entgrannung realisieren. Das Einbringen der Entgrannerbleche in diesem Bereich des ersten Dreschkorbes wird durch das bereits beschriebene vereinfachte Handling der auswechselbaren Korbsegmente begünstigt, da die zusätzlichen Entgrannerbleche bei ausgebautem Zustand der Korbsegmente in den Rahmen einbringbar sind. Die Entgrannerbleche sind um einen Drehpunkt schwenkbar angeordnet, so dass sie frei nach unten hängen können, wodurch dieser Korbabschnitt offen ist, oder sie sind in Richtung der Dreschtrommel schwenkbar und am Rahmen durch Arretiermittel befestigbar, so dass dieser Korbabschnitt durch die eingebauten Entgrannerbleche verschließbar ist und eine weitere Entgrannungstufe bildet. Die Länge der jeweils verbauten Entgrannerbleche kann erntegutabhängig variieren.

Darüber hinaus kann die zumindest eine Erntegutbearbeitungseinrichtung als eine achsparallel zu den Dreschtrommeln im Übergangsbereich angeordnete, um eine Schwenkachse schwenkbare Leiste ausgebildet sein, die sich über die Breite der Dreschtrommeln erstreckt. Die der Eingangsseite des Dreschkorbes vorschaltbare Leiste ist in ihrem mit der zweiten Dreschtrommel zusammenwirkenden Bereich zumindest abschnittsweise mit Vorsprüngen versehen, die über die Breite der Leiste verteilt angeordnet sind. Bei dieser Ausgestaltung ist zur Berücksichtigung der Art des jeweils zu verarbeitenden Gutes die Position der Leiste veränderbar, in dem die dem Dreschkorbeingang vorschaltbare Leiste in eine Wirkstellung gebracht oder aus dieser rückgestellt wird.

Dabei kann die Leiste einen geschlossenen Grundkörper mit einem im Wesentlichen U-förmigen Profil aufweisen. Die Außenwandung des U-förmigen Abschnittes des Grundkörpers ist glatt ausgeführt, so dass die Leiste in eine Position überführbar ist, in der diese nicht auf das Erntegut einwirkt, sondern lediglich der Gutführung dient.

Vorzugsweise kann die Leiste auf ihrem Umfang zumindest ein sich über die Breite der Leiste erstreckendes Element aufweisen, welches in radialer Richtung über den Grundkörper hinausragt. Entsprechend ist die Leiste in eine Position überführbar, in der das Element auf das Erntegut einwirkt. Insbesondere kann das den Grundkörper verschließende Element als eine Platte ausgeführt sein, die senkrecht zu den Schenkeln angeordnet ist und mit zumindest einem der Schenkel bündig abschließt.

Des Weiteren kann der Abschnitt der Platte, der sich zwischen den Schenkeln erstreckt, mit über die Breite der Leiste verteilt angeordneten, senkrecht auf der Platte stehenden, kreissegmentförmig ausgebildeten Vorsprüngen versehen sein.

Die spezifische Ausgestaltung und Anordnung der Platte an dem Grundkörper ermöglicht eine Positionierung der Leiste derart, dass die als Leiste ausgeführte Erntegutbearbeitungseinrichtung in einer ersten Position nicht auf das Erntegut einwirkt. In einer zweiten Position der Erntegutbearbeitungseinrichtung, kann die Leiste soweit geschwenkt werden, dass der glatte Schenkel eine Art Rampe bildet, so dass sich die Spaltweite zwischen dem zweiten Abschnitt des ersten Dreschkorbes und der zweiten Dreschtrommel verringert, wobei die Spaltweite zwischen den Dreschkörben und den Dreschtrommeln unverändert bleibt, was zu einem aggressiveren Dreschverhalten führt, während in einer Dritten Position der als Leiste ausgeführten Erntegutbearbeitungseinrichtung die kreissegmentförmig ausgebildeten Vorsprüngen auf das Erntegut einwirken, wodurch ein deutlich aggressiveres Verhalten beim Entgrannen erreichbar ist.

Vorteilhafterweise können der erste Dreschkorb und der zweite Dreschkorb Laschen aufweisen, über die der erste Dreschkorb und der zweite Dreschkorb mit Winkelhebeln gelenkig verbunden sind, die um jeweils eine ortsfeste Achse verschwenkbar sind. Diese vorzugsweise hydraulisch betätigbare Kinematik wirkt simultan auf diese drei Achsen ein, von denen jeweils eine im Eingangsbereich des ersten Dreschkorbes und des zweiten Dreschkorbes angeordnet sind, während sich die dritte Achse im Ausgangsbereich der des zweiten Dreschkorbes befindet. Diese Kinematik bewirkt, dass bei einer Verstellung des zweiten Dreschkorbes für eine Variation der Spaltweite im Eingangsbereich des zweiten Dreschkorbes zugleich auch der Eingangsbereich des ersten Dreschkorbes variiert wird.

Insbesondere können die Erntegutbearbeitungseinrichtungen unabhängig voneinander betätigbar sein. Somit lässt sich bei Bedarf eine mehrstufige Entgrannung realisieren, indem wahlweise die als Entgrannerbleche ausgeführten Erntegutbearbeitungsvorrichtungen sowie die als Leiste ausgeführte Erntegutbearbeitungsvorrichtung in eine Stellung oder Position überführbar sind, in der sie auf den Erntegutstrom einwirken können.

Die vorliegende Erfindung wird nachfolgend anhand eines in den Zeichnungen dargestellten Ausführungsbeispieles näher erläutert.

Es zeigen:
- Fig. 1: eine schematische Teilansicht eines Mähdreschers;
- Fig. 2: eine schematische Seitenansicht einer Dreschvorrichtung;
- Fig. 3: eine perspektivische Ansicht des ersten und des zweiten Dreschkorbes gemäß Fig. 2;
- Fig. 4: eine vergrößerte Teilansicht des ersten Dreschkorbes gemäß Fig. 3;
- Fig. 5: eine perspektivische Ansicht des ersten und des zweiten Dreschkorbes gemäß Fig. 3 von unten;
- Fig. 6: eine Detailansicht eines Übergangsbereiches gemäß Fig. 2;
- Fig. 7: eine Detailansicht des Bereiches zwischen dem ersten Dreschkorb und dem zweiten Dreschkorb gemäß Fig. 3.

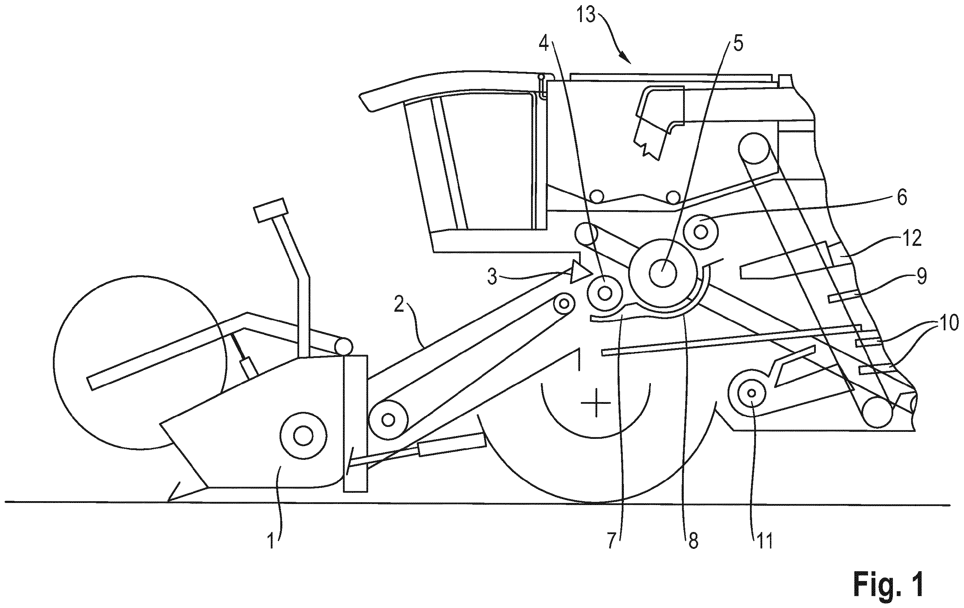

In der Figur 1 ist in schematisierter Weise eine Teilansicht eines selbstfahrenden Mähdreschers 13 dargestellt, wobei dieser Mähdrescher 13 in seinem Frontbereich mit einem eine Haspel aufweisenden Schneidwerk 1 und einem sich daran anschließenden Schrägförderer 2 versehen ist. Im Erntebetrieb wird das auf dem Feld stehende Erntegut, bei dem es sich um Getreide oder um andere Halmfrüchte handeln kann, mittels eines innerhalb des Schneidwerks 1 angeordneten Mähwerks geschnitten und über eine nicht näher dargestellte Einzugsschnecke dem Schrägförderer 2 zugeführt. Der Schrägförderer 2, der mit Förderleisten versehene Ketten aufweisen kann, transportiert das Erntegut in eine Dreschvorrichtung 3.

Wie der Figur 1 entnommen werden kann, weist die Dreschvorrichtung 3 insgesamt drei Trommeln auf, und zwar eine Vorbeschleunigungstrommel 4, eine Dreschtrommel 5 und eine Strohwendetrommel 6. Dabei wirkt die Vorbeschleunigungstrommel 4 mit einem ersten Dresch- und Abscheidekorb 7 zusammen, der die Vorbeschleunigungstrommel 4 über einen Teil ihres Umfangs umschließt. An diesen ersten Dresch- und Abscheidekorb 7 schließt sich in Förderrichtung des Erntegutes ein zweiter Dresch- und Abscheidekorb 8 an, der wiederum die Dreschtrommel 5 über einen Teil ihres Umfangs umgibt. Unterhalb dieser aus dem ersten und zweiten Dresch- und Abscheidekorb 7, 8 gebildeten Anordnung erstreckt sich ein in Schwingungen versetzbarer Vorbereitungsboden 9, der mittels einer nicht näher dargestellten waschbrettartigen Oberfläche die aus dem Erntegut ausgedroschenen Körner zu Sieben 10 fördert, wobei mittels eines Gebläses 11 eventuell den Körnern beigemischte Anteile von Kurzstroh, Grannen, Hülsen usw. entfernt werden. Der Strohwendetrommel 6 folgt in Strömungsrichtung des Halmgutes eine durch mehrere Hordenschüttler 12 gebildete Nachabscheideeinrichtung, über die restliche Körner aus dem Stroh abgeschieden werden.

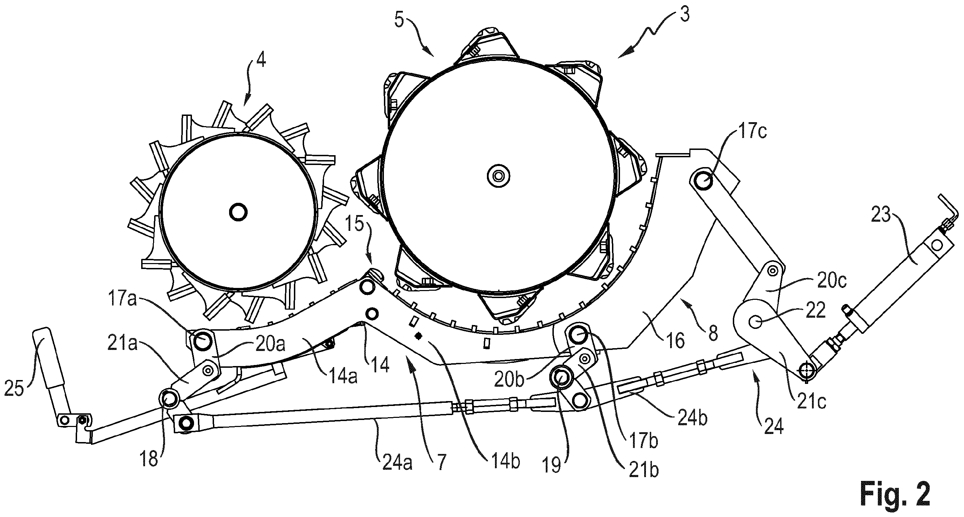

Die Ausbildung der Dreschvorrichtung 3 soll nachfolgend anhand der Figur 2 näher erläutert werden. Die Darstellung zeigt eine schematische Seitenansicht der Dreschvorrichtung 3, wobei aus Vereinfachungsgründen nur die erste Dreschtrommel 4, das heißt die Vorbeschleunigungstrommel, die zweite Dreschtrommel 5 sowie die Strohwendetrommel 6 nebst den zugehörigen Dreschkörben 7 und 8 dargestellt sind. Der erste Dreschkorb 7, der die erste Dreschtrommel 4 abschnittsweise umschlingt, weist einen Korbrahmen 14 auf, der aus zwei parallel zueinander angeordneten Korbwangen mit jeweils zwei kreisbogenförmigen Abschnitten 14a, 14b besteht. Die kreisbogenförmigen Abschnitte 14a, 14b sind zueinander abgewinkelt angeordnet und bilden einen keilförmigen Übergangsbereich 15 zwischen den Abschnitten 14a, 14b aus. Der Übergangsbereich 15 erstreckt sich in radialer Richtung zwischen der ersten Dreschtrommel 4 und der zweiten Dreschtrommel 5 und erstreckt sich über deren axiale Ausdehnung. Der zweite Abschnitt 14b des ersten Korbrahmens 14 umschlingt auch die zweite Dreschtrommel 6 abschnittsweise. An den zweiten Abschnitt 14b des ersten Korbrahmens 14 schließt sich ein zweiter Korbrahmen 16 an, der die zweite Dreschtrommel 6 abschnittsweise umschlingt. Der zweite Abschnitt 14b des ersten Korbrahmens 14 und der zweite Korbrahmen 16 sind durch eine Schwenkachse 17b miteinander verbunden. Der Begriff Umschlingung im Sinne der Beschreibung bezeichnet den Kreisbogen, der jeweils zwischen dem Anfang und dem Ende des ersten die zweite Dreschtrommel 5 umgebenden Dreschkorbes 7 sowie zwischen dem Anfang und Ende des zweiten die zweite Dreschtrommel 5 umgebenden Dreschkorbes 8 beschrieben ist.

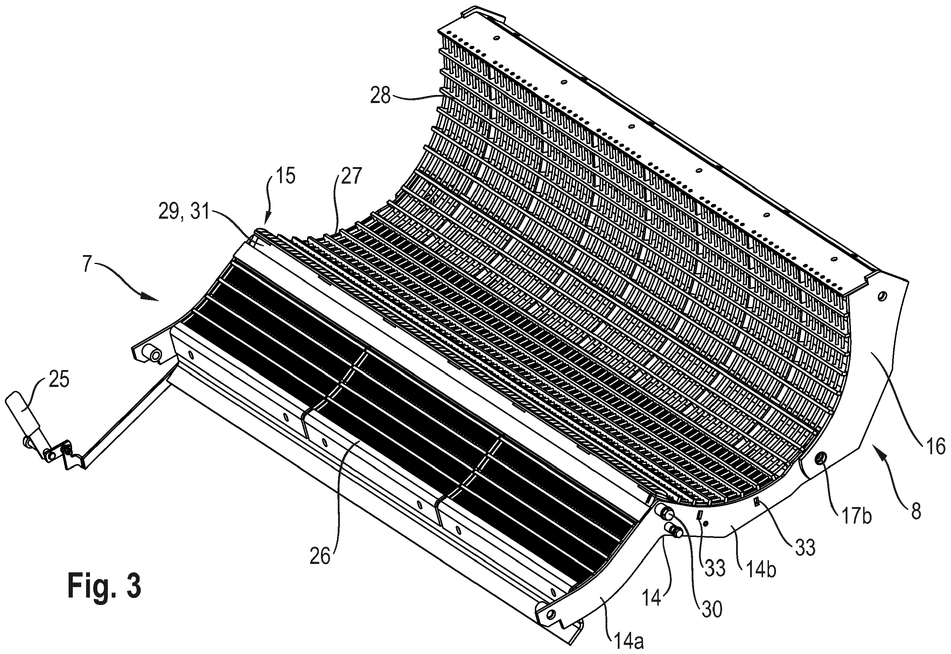

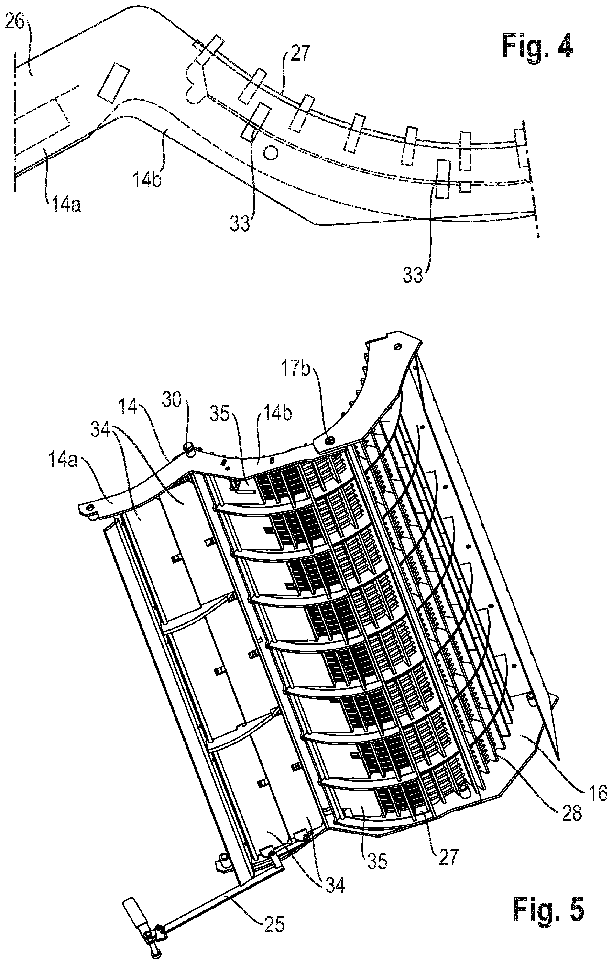

Im Eingangsbereich der ersten Dreschtrommel 4 und der zweiten Dreschtrommel 5 sowie im Ausgangsbereich der zweiten Dreschtrommel 5 befinden sich weitere Schwenkachsen 17a, 17c. Unterhalb des ersten Dreschkorbes 4 und des zweiten Dreschkorbes 5 ist eine Hebelanordnung 24 vorgesehen, die der Verstellung des Abstandes zwischen den Dreschkörben 7, 8 und den Dreschtrommeln 4, 5 dient. Der erste Dreschkorb 7 und der zweite Dreschkorb 8 weisen Laschen 20a, 20b, 20c auf, über die der erste Dreschkorb 7 und der zweite Dreschkorb 8 mit Winkelhebeln 21a, 21b, 21c gelenkig verbunden sind, die um jeweils eine der ortsfesten Achse 18, 19, 22 verschwenkbar sind. Die Laschen 20a, 20b, 20c und die Winkelhebel 21a, 21b, 21c sind unterhalb der Korbrahmen 14, 16 angeordnet. In einem Bereich hinter der zweiten Dreschtrommel 5 ist ein zentraler hydraulischer Verstellzylinder 23 angeordnet, der über einen Blasenspeicher verfügt. Der Verstellzylinder 23 steht mit den Winkelhebeln 21a, 21b, 21c über Koppelstangen 24 a, 24b in Wirkverbindung und dient der Verstellung der Spaltweite der Dreschvorrichtung 3. Vor der ersten Dreschtrommel 4 ist ein Bedienhebel 25 angeordnet, der durch eine Bedienperson von der Außenseite des Mähdreschers her betätigbar ist. Der Bedienhebel 25 dient dazu so genannte Entgrannerbleche 34, die unterhalb des ersten Abschnittes 14a des ersten Dreschkorbes 7 angeordnet sind, betätigen zu können, in dem diese ein- oder ausgeschwenkt werden können, wie weiter unten mit Bezug auf die Fig. 3 und 4 noch erläutert wird.

In Abhängigkeit von der Erntegutart muss der radiale Abstand zwischen den Dreschkörben 7, 8 und den Dreschtrommeln 4, 5, die Spaltweite, eingestellt werden. So nimmt beispielsweise der einzustellende radiale Abstand zwischen den Dreschtrommeln und den Dreschkörben bei der Verarbeitung von Weizen hin zu Mais zu. Um den aus dem Stand der Technik bekannten Effekt, dass der Verlauf der Spaltweite vom Eingangsspalt zwischen dem ersten Dreschkorb 7 und der zweiten Dreschtrommel 5 hin zum Ausgangspalt zwischen dem zweiten Dreschkorb 5 und der zweiten Dreschtrommel 8 einen ungleichmäßigen, bauchförmigen Verlauf aufweist, der sich ungünstig auf den Gutfluss sowie die Qualität des Druschprozesses auswirkt, zu vermeiden, ist vorgesehen, dass die Umschlingung der zweiten Dreschtrommel 5 durch den ersten Dreschkorb 7 und den zweiten Dreschkorb 8 annähernd gleich ist. Der erste Dreschkorb 7 und der zweite Dreschkorb 8 sind durch die Schwenkachse 17b miteinander verbunden, an der auch die Lasche 20b und über diese der Winkelhebel 21b angelenkt sind. Bei einer Verstellung des Verlaufes der Spaltweite zur Anpassung an eine andere Erntegutart durch die Beaufschlagung der Hebelanordnung 24 durch den Hydraulikzylinder 23 stellt sich eine im Wesentlichen gleichmäßige Beabstandung über den gesamten von dem ersten Dreschkorb 7 und dem zweiten Dreschkorb 8 umschlungenen Abschnitt des zweiten Dreschkorbes 5 ein. Der Winkelhebel 21b, der über die Lasche 20b an die Schwenkachse 17b gekoppelt ist, bewirkt, dass sich der zweite Abschnitt 14b des ersten Dreschkorbes 7 und der zweite Dreschkorb 8 in annähernd gleichem Maße von der zweiten Dreschtrommel 5 entfernen wie der Übergangsbereich 15 und der Ausgangsbereich des zweiten Dreschkorbes 8.

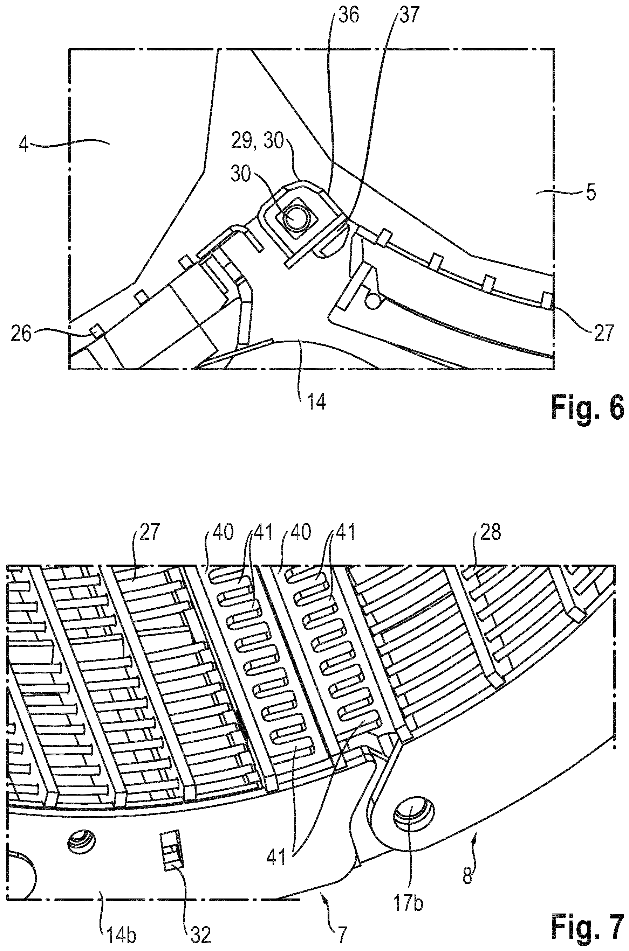

Die Fig. 3 zeigt eine perspektivische Darstellung des ersten Dreschkorbes 7 und des zweiten Dreschkorbes 8 der Dreschvorrichtung 3 gemäß Fig. 2 von oben. Der erste Dreschkorb 7 und der zweite Dreschkorb 8 weisen zwischen den Korbrahmen 14, 16 angeordnete Dreschkorbsegmente 26, 27, 28 auf. Die Dreschkorbsegmente 26, 27, 28 können sich jeweils über die gesamte Breite der Dreschvorrichtung 3 erstrecken oder in Gutflussrichtung gesehen zumindest abschnittsweise aus mehreren nebeneinander angeordneten Dreschkorbsegmenten bestehen. Zumindest die Dreschkorbsegmente 26 und 27 des ersten Dreschkorbes 7 sind lösbar zwischen Wangen des Korbrahmens 14 angeordnet. Wie in der Darstellung in Fig. 3 angedeutet, können die Dreschkorbsegmente 26, 27, 28 des ersten Dreschkorbes 7 und des zweiten Dreschkorbes 8 unterschiedlich ausgestaltet sein. So weist das mindestens eine Dreschkorbsegment 26 des ersten Dreschkorbes 7, welches die erste Dreschtrommel 4 abschnittsweise umschlingt, eine andere Lochung beziehungsweise Öffnungsweise auf, als das mindestens eine Dreschkorbsegment 27, welches die zweite Dreschtrommel 5 abschnittsweise umschlingt. Das oder die Dreschkorbsegmente 28 des zweiten Dreschkorbes 8, welches oder welche die zweite Dreschtrommel 5 abschnittsweise umschließen, sind ebenfalls von denen des ersten Dreschkorbes 7 abweichend ausführbar. Weiterhin ist der Darstellung in Fig. 3 eine Erntegutbearbeitungseinrichtung 29 zu entnehmen, die als eine achsparallel zu den Dreschtrommeln 4, 5 in dem keilförmigen Übergangsbereich 15 angeordnete, um eine Schwenkachse 30 schwenkbare Leiste 31 ausgebildet ist, die sich über die Breite der Dreschtrommeln 4, 5 erstreckt. Die Leiste 31 weist einen geschlossenen Grundkörper 36 mit einem im Wesentlichen U-förmigen Profil auf, wie der in Fig. 6 dargestellten Detailansicht gemäß Fig. 3 zu entnehmen ist.

In Fig. 4 ist eine vergrößerte Teilansicht des ersten Dreschkorbes 7 gemäß Fig. 3 dargestellt, anhand derer kurz erläutert wird, wie die einzelnen Dreschkorbsegmente 26, 27 des ersten Dreschkorbes 7 aus diesem entnehmbar sind. Hierzu ist der Korbrahmen 14 teilweise strichliniert dargestellt, um weitere Details sichtbar zu machen. Zwischen den Abschnitten 14a, 14b des Korbrahmens 14 erstrecken sich Gleitschienen, die der Führung des jeweiligen Dreschkorbsegmentes 27 bei dessen Einlegen in den ersten Dreschkorb 7 dienen. Um das Herausnehmen der Dreschkorbsegmente 27 zu vereinfachen, weisen die zweiten Abschnitte 14b des Korbrahmens 14 Ausnehmungen 33 auf, in die von außen jeweils ein Hebel einführbar ist, um das jeweilige Dreschkorbsegment 27 anheben zu können. Die Entnahme des mindestens einen Dreschkorbsegmentes 27 erfolgt durch das Anheben des Dreschkorbsegmentes 27 in radialer Richtung und das anschließende Herausziehen in axialer Richtung der ersten Dreschkorbes 7.

Die Darstellung in Fig. 5 zeigt eine perspektivische Ansicht des ersten Dreschkorbes 7 und des zweiten Dreschkorbes 8 gemäß Fig. 3 von unten. Unterhalb des ersten Abschnittes 14a sind so genannte Entgrannerbleche 34 einhängbar, die aus einer senkrecht nach unten hängenden Position, in der die Entgrannerbleche 34 den Erntegutstrom nicht beeinflussen, in eine an dem mindestens einen Dreschkorbsegment 27 anliegenden Position überführbar sind, in der diese den ersten Abschnitt 14a verschließen, wie dargestellt ist. Die Betätigung der Entgrannerbleche 34 erfolgt manuell durch den Bedienhebel 25. In analoger Weise können unmittelbar hinter dem Übergangsbereich 15 im zweiten Abschnitt des ersten Dreschkorbes 7 ebenfalls Entgrannerbleche 35 einhängbar sein, die in gleicher Weise betätigbar sind.

In Fig. 6 ist eine Detailansicht des Übergangsbereiches 15 gemäß Fig. 2 dargestellt, welche die Erntegutbearbeitungsvorrichtung 29 im Schnitt darstellt. Die Leiste 31 weist einen geschlossenen Grundkörper 36 mit einem im Wesentlichen U-förmigen Profil auf und ist um die Schwenkachse 30 schwenkbar. Auf ihrem Umfang weist die Leiste 31 zumindest ein sich über die Breite der Leiste 31 erstreckendes Element 37 auf, welches in radialer Richtung über den Grundkörper 36 hinausragt. Der U-förmige Grundkörper 36 wird durch eine Platte 38 verschlossen, die senkrecht zu den Schenkeln des Grundkörpers 36 angeordnet ist und diesen einseitig überragt. Auf der Platte 38 ist das Element 37 befestigt, welches mit senkrecht auf der Platte 38 stehenden, kreissegmentförmig ausgebildeten Vorsprüngen 39 versehen ist. In der in Fig. 6 dargestellten Position der Leiste 31 befindet sich das Element 37 außerhalb beziehungsweise unterhalb der Gutflussebene und beeinflusst somit das Erntegut nicht. In dieser Stellung der Leiste 31 wird das Erntegut über die glatten Oberflächen des Grundkörpers 36 geführt. Durch das Drehen der Leiste 31 um die Schwenkachse 30 lässt sich die Leiste 31 in eine Stellung überführen, in der ein Schenkel des Grundkörpers 36 teilweise in den Gutstrom hineinragt und so eine Art Rampe bildet. Der Spaltabstand zwischen dem ersten Dreschkorb 7 und der zweiten Dreschtrommel 5 im Übergangsbereich 15 lässt somit reduzieren, dass Ausdruschverhalten wird auf diese Weise aggressiver. Durch ein weiteres Drehen der Leiste 31 wird erreicht, dass das Element 37 mit den darauf befindlichen Vorsprüngen 39 in den Gutfluss hineinragt. In dieser Stellung der Leiste 31 ist die Platte 38 mit dem darauf angeordneten Element 37 der zweiten Dreschtrommel 5 zugewandt, was zu einer weiteren Verringerung des Spaltabstandes und somit einem noch aggressiveren Ausdruschverhalten führt, als der zuvor beschriebenen Stellung der Leiste 31. Der über den Grundkörper 36 hinausgehende Abschnitt der Platte 38 hat zudem die Funktion, in dieser Stellung der Erntegutbearbeitungsvorrichtung 29 den sich zwischen der Erntegutbearbeitungsvorrichtung 29 und dem benachbarten Dreschkorbsegment 27 ausbildenden Spalt zu verkleinern, um ein Hindurchtreten von Erntegut durch diesen Spalt zu reduzieren.

Auf Grund der Anordnung der Entgrannerbleche 34, 35 vor und hinter dem Übergangsbereich 15 sowie der Anordnung der Erntegutbearbeitungsvorrichtung 29 im Übergangsbereich 15 zwischen den Entgrannerblechen 34, 35 lässt sich bei Bedarf eine mehrstufige Entgrannung realisieren, indem wahlweise die Entgrannerbleche 34, 35 sowie die Erntegutbearbeitungsvorrichtung 29 einzeln oder gemeinsam in eine Stellung oder Position überführbar sind, in der sie auf den Erntegutstrom einwirken können.

In Fig. 7 ist eine Detailansicht des Bereiches zwischen dem ersten Dreschkorb 7 und dem zweiten Dreschkorb 8 dargestellt, in welchem diese um die Schwenkachse 17b zueinander verschwenkbar sind. Um eine Verschwenkung der beiden Dreschkörbe 7, 8 zueinander um die gemeinsame Schwenkachse 17b zu ermöglichen, muss in diesem Bereich zwischen den beiden Dreschkorbsegmenten 27 und 28 ein räumlicher Abstand gegeben sein. Damit jedoch der Anteil an Erntegut, insbesondere Stroh, der in diesem Bereich zwischen den Dreschkörben 7, 8 hindurchtreten und auf den Vorbereitungsboden 9 gelangen kann, so gering wie möglich gehalten wird, ist zumindest eine Schiene 40 mit fingerförmigen Gutleitelementen 41 zwischen den Dreschkörben 7, 8 angeordnet.

**Bezugszeichenliste**

| | | | |
|---|---|---|---|
| **1** | Schneidwerk | **22** | Ortsfeste Achse |
| **2** | Schrägförderer | **23** | Verstellzylinder |
| **3** | Dreschvorrichtung | **24** | Hebelanordnung |
| **4** | Erste Dreschtrommel | **25** | Bedienhebel |
| **5** | Zweite Dreschtrommel | **26** | Dreschkorbsegment |
| **6** | Strohwendetrommel | **27** | Dreschkorbsegment |
| **7** | Erster Dreschkorb | **28** | Dreschkorbsegment |
| **8** | Zweiter Dreschkorb | **29** | Erntegutbearbeitungseinrichtung |
| **9** | Vorbereitungsboden | **30** | Schwenkachse |
| **10** | Reinigungssieb | **31** | Leiste |
| **11** | Reinigungsgebläse | | |
| **12** | Hordenschüttler | **33** | Ausnehmung |
| **13** | Mähdrescher | **34** | Entgrannerblech |
| **14** | Erster Korbrahmen | **35** | Entgrannerblech |
| **14a** | Erster Abschnitt | **36** | Grundkörper |
| **14b** | Zweiter Abschnitt | **37** | Element |
| **15** | Übergangsbereich | **38** | Schiene |
| **16** | Zweiter Korbrahmen | **39** | Vorsprung |
| **17a** | Schwenkachse | **40** | Schiene |
| **17b** | Schwenkachse | **41** | Gutleitelement |
| **17c** | Schwenkachse | | |
| **18** | Ortsfeste Achse | | |
| **19** | Ortsfeste Achse | | |
| **20a** | Lasche | | |
| **20b** | Lasche | | |
| **20c** | Lasche | | |
| **21a** | Winkelhebel | | |
| **21b** | Winkelhebel | | |
| **21c** | Winkelhebel | | |

## Patentansprüche

1. Dreschvorrichtung (3), umfassend eine erste Dreschtrommel (4) und eine zweite Dreschtrommel (5), die hintereinander angeordnet sind, einen ersten, die erste Dreschtrommel (4) und die zweite Dreschtrommel (5) abschnittsweise in Umfangsrichtung umschlingenden Dreschkorb (7) und einen zweiten, die zweite Dreschtrommel (5) abschnittsweise in Umfangsrichtung umschlingenden Dreschkorb (8), welche in radialer Richtung der Dreschtrommeln (4, 5) verstellbar sind, sowie zumindest einer Erntegutbearbeitungseinrichtung (29, 34, 35), die am ersten Dreschkorb (7) angeordnet ist, **dadurch gekennzeichnet, dass** der erste Dreschkorb (7) und der zweite Dreschkorb (8) um eine gemeinsame, die Dreschkörbe (7, 8) verbindende Achse (17b) schwenkbar sind, und dass die Umschlingung der zweiten Dreschtrommel (5) durch den ersten Dreschkorb (7) und den zweiten Dreschkorb (8) annähernd gleich ist.

2. Dreschvorrichtung (3) nach Anspruch 1, **dadurch gekennzeichnet, dass** zumindest der erste Dreschkorb (7) einen Korbrahmen (14) aufweist, in dem jeweils mindestens zwei Dreschkorbsegmente (26, 27) in Umfangsrichtung angeordnet sind, die zumindest teilweise auswechselbar sind.

3. Dreschvorrichtung (3) nach Anspruch 2, **dadurch gekennzeichnet, dass** die Dreschkorbsegmente (26, 27) gegenüber dem Rahmen des ersten Dreschkorbes (7) in radialer Richtung anhebbar und anschließend in axialer Richtung bewegbar sind.

4. Dreschvorrichtung (3) nach einem der Ansprüche 2 oder 3, **dadurch gekennzeichnet, dass** in axialer Richtung des ersten Dreschkorbes (7) mindestens zwei auswechselbare Dreschkorbsegmente (26, 27) nebeneinander angeordnet sind.

5. Dreschvorrichtung (3) nach einem der Ansprüche 2 bis 4, **dadurch gekennzeichnet, dass** an dem Korbrahmen des ersten Dreschkorbes (7) Gleitschienen angeordnet sind.

6. Dreschvorrichtung (3) nach einem der Ansprüche 2 bis 5, **dadurch gekennzeichnet, dass** in dem Korbrahmen (14) des ersten Dreschkorbes (7) und den darin aufgenommenen Dreschkorbsegmenten (26, 27) nutförmige Ausnehmungen (33) versetzt zueinander angeordnet sind.

7. Dreschvorrichtung (3) nach einem der Ansprüche 1 bis 6, **dadurch gekennzeichnet, dass** der erste Dreschkorb (7) einen ersten und einen zweiten kreisbogenförmigen Abschnitt (14a, 14b) aufweist, die zueinander abgewinkelt angeordnet sind und einen keilförmigen Übergangsbereich (15) zwischen den beiden Abschnitten (14a, 14b) ausbilden.

8. Dreschvorrichtung (3) nach Anspruch 7, **dadurch gekennzeichnet, dass** die zumindest eine Erntegutbearbeitungseinrichtung (29) als unterhalb des ersten Dreschkorbes (7) vordem Übergangsbereich (15) einlegbare Entgrannerbleche (34) ausgeführt sind.

9. Dreschvorrichtung (3) nach einem der Ansprüche 7 oder 8, **dadurch gekennzeichnet, dass** die zumindest eine Erntegutbearbeitungseinrichtung (29) als hinter dem Übergangsbereich (15) in den zweiten Abschnitt (14b) unterhalb des ersten Dreschkorbes (7) einlegbare Entgrannerbleche (35) ausgeführt sind.

10. Dreschvorrichtung (3) nach einem der Ansprüche 7 bis 9, **dadurch gekennzeichnet, dass** die zumindest eine Erntegutbearbeitungseinrichtung (29) als eine achsparallel zu den Dreschtrommeln (4, 5) im Übergangsbereich (15) angeordnete, um eine Schwenkachse (30) schwenkbare Leiste (31) ausgebildet ist, die sich über die Breite der Dreschtrommeln (4, 5) erstreckt.

11. Dreschvorrichtung (3) nach Anspruch 10, **dadurch gekennzeichnet, dass** die Leiste (31) einen geschlossenen Grundkörper (36) mit einem im Wesentlichen U-förmigen Profil aufweist.

12. Dreschvorrichtung (3) nach Anspruch 11, **dadurch gekennzeichnet, dass** die Leiste (31) auf ihrem Umfang zumindest ein sich über die Breite der Leiste (31) erstreckendes Element (37) aufweist, welches in radialer Richtung über den Grundkörper (36) hinausragt.

13. Dreschvorrichtung (3) nach einem der Ansprüche 1 bis 12, **dadurch gekennzeichnet, dass** der erste Dreschkorb (4) und der zweite Dreschkorb (5) Laschen (20a, 20b, 20c) aufweisen, über die der erste Dreschkorb (7) und der zweite Dreschkorb (8) mit Winkelhebeln (21a, 21b, 21c) gelenkig verbunden sind, die um jeweils eine ortsfeste Achse (18, 19, 22) verschwenkbar sind.

14. Dreschvorrichtung (3) nach einem der Ansprüche 1 bis 12, **dadurch gekennzeichnet, dass** die Erntegutbearbeitungseinrichtungen (29, 31, 34, 35) unabhängig voneinander betätigbar sind.

## Claims

1. A threshing apparatus (3) comprising a first threshing drum (4) and a second threshing drum (5) disposed one after the other, a first concave (7) enclosing the first threshing drum (4) and the second threshing drum (5) portion-wise in a circumferential direction, and a second concave (8) enclosing the second threshing drum (5) portion-wise in a circumferential direction, which concaves are displaceable in the radial direction of the threshing drums (4, 5), and at least one crop-processing device (29, 34, 35) arranged at the first concave (7), **characterised in that** the first concave (7) and the second concave (8) are pivotable about a common axis (17b) connecting the concaves (7, 8) and that the enclosure of the second threshing drum (5) by the first concave (7) and the second concave (8) is approximately identical.

2. A threshing apparatus (3) according to claim 1 **characterised in that** at least the first concave (7) comprises a concave frame (14) in which at least two concave segments (26, 27) are respectively disposed in the circumferential direction and are at least partially replaceable.

3. A threshing apparatus (3) according to claim 2 **characterised in that** the concave segments are liftable in the radial direction relative to the frame of the first concave (7) and are then movable in the axial direction.

4. A threshing apparatus (3) according to one of claims 2 and 3 **characterised in that** at least two replaceable concave segments (26, 27) are disposed next to each other in the axial direction of the first concave (7).

5. A threshing apparatus (3) according to one of claims 2 to 4 **characterised in that** slide rails are disposed on the concave frame of the first concave (7).

6. A threshing apparatus (3) according to one of claims 2 to 5 **characterised in that** groove-shaped recesses (33) are disposed in offset relationship with each other in the concave frame (14) of the first concave (7) and in the concave segments (26, 27) accommodated therein.

7. A threshing apparatus (3) according to one of claims 1 to 6 **characterised in that** the first concave (7) comprises a first and a second circular-arcuate portion (14a, 14b) which are angled with respect to each other and form a wedge-shaped transitional region between the two portions (14a, 14b).

8. A threshing apparatus (3) according to claim 7 **characterised in that** the at least one crop-processing device (29) is in the form of deawning plates (34) which can be fitted underneath the first concave (7) upstream of the transitional region (15).

9. A threshing apparatus (3) according to one of claims 7 and 8 **characterised in that** the at least one crop-processing device (29) is in the form of deawning plates (35), which can be fitted downstream of the transitional region (15) into the second portion (14b) underneath the first concave (7).

10. A threshing apparatus (3) according to one of claims 7 to 9 **characterised in that** the at least one crop-processing device (29) is in the form of a bar (31) which is arranged in axis-parallel relationship to the threshing drums (4, 5) in the transitional region (15) and is pivotable about a pivot axis (30) and extends over the width of the threshing drums (4, 5).

11. A threshing apparatus (3) according to claim 10 **characterised in that** the bar (31) comprises a closed main body (36) of a substantially U-shaped profile.

12. A threshing apparatus (3) according to claim 11 **characterised in that** the bar (31) on the circumference thereof comprises at least one element (37) extending over the width of the bar (31) and projecting beyond the main body (36) in the radial direction.

13. A threshing apparatus (3) according to one of claims 1 to 12 **characterised in that** the first concave (7) and the second concave (8) comprise straps (20a, 20b, 20c), by way of which the first concave (7) and the second concave (8) are hingedly connected to angle levers (21a, 21b, 21c) which are each pivotable about a fixed axis (18, 19, 22).

14. A threshing apparatus (3) according to one of claims 1 to 12 **characterised in that** the crop-processing devices (29, 34, 35) are actuable independently of one another.

## Revendications

1. Dispositif de battage (3), comprenant un premier batteur (4) et un second batteur (5) qui sont disposés l'un derrière l'autre, un premier contre-batteur (7) enveloppant par portions le premier batteur (4) et le second batteur (5) dans la direction circonférentielle, et un second contre-batteur (8) enveloppant par portions le second batteur (5) dans la direction circonférentielle, lesquels sont réglables dans la direction radiale des batteurs (4, 5), ainsi qu'au moins un équipement de traitement de produit récolté (29, 34, 35) qui est disposé sur le premier contre-batteur (7), **caractérisé en ce que** le premier contre-batteur (7) et le second contre-batteur (8) sont pivotants autour d'un axe commun (17b) reliant les contre-batteurs (7, 8), et **en ce que** l'enveloppement du second batteur (5) par le premier contre-batteur (7) et par le second contre-batteur (8) est sensiblement identique.

2. Dispositif de battage (3) selon la revendication 1, **caractérisé en ce qu'**au moins le premier contre-batteur (7) comporte un cadre de contre-batteur (14) dans lequel sont respectivement disposés, dans la direction circonférentielle, au moins deux segments de contre-batteur (26, 27) qui sont au moins en partie échangeables.

3. Dispositif de battage (3) selon la revendication 2, **caractérisé en ce que** les segments de contre-batteur (26, 27) sont levables dans la direction radiale par rapport au cadre du premier contre-batteur (7) et ensuite déplaçables dans la direction axiale.

4. Dispositif de battage (3) selon une des revendications 2 ou 3, **caractérisé en ce que** dans la direction axiale du premier contre-batteur (7) sont disposés côte à côte au moins deux segments de contre-batteur échangeables (26, 27).

5. Dispositif de battage (3) selon une des revendications 2 à 4, **caractérisé en ce que** sur le cadre de contre-batteur du premier contre-batteur (7) sont disposées des glissières.

6. Dispositif de battage (3) selon une des revendications 2 à 5, **caractérisé en ce que** dans le cadre de contre-batteur (14) du premier contre-batteur (7) et dans les segments de contre-batteur (26, 27) logés dans celui-ci sont ménagés de manière mutuellement décalée des évidements en forme de gorges (33).

7. Dispositif de battage (3) selon une des revendications 1 à 6, **caractérisé en ce que** le premier contre-batteur (7) comporte une première et une seconde portion arquée (14a, 14b) qui sont disposées de manière coudée l'une par rapport à l'autre et forment entre les deux portions (14a, 14b) une zone de transition en forme de coin (15).

8. Dispositif de battage (3) selon la revendication 7, **caractérisé en ce que** le au moins un équipement de traitement de produit récolté (29) est conformé en tôles d'ébarbage (34) insérables sous le premier contre-batteur (7) avant la zone de transition (15).

9. Dispositif de battage (3) selon une des revendications 7 ou 8, **caractérisé en ce que** le au moins un équipement de traitement de produit récolté (29) est conformé en tôles d'ébarbage (35) insérables derrière la zone de transition (15) dans la seconde portion (14b) sous le premier contre-batteur (7).

10. Dispositif de battage (3) selon une des revendications 7 à 9, **caractérisé en ce que** le au moins un équipement de traitement de produit récolté (29) est conformé en barrette (31) qui est disposée dans la zone de transition (15) de manière parallèle axialement aux batteurs (4, 5), qui peut pivoter autour d'un axe de pivotement (30) et qui s'étend sur la largeur des batteurs (4, 5).

11. Dispositif de battage (3) selon la revendication 10, **caractérisé en ce que** la barrette (31) comporte un corps de base fermé (36) avec un profil sensiblement en forme de U.

12. Dispositif de battage (3) selon la revendication 11, **caractérisé en ce que** la barrette (31) comporte, sur sa périphérie, au moins un élément (37) qui s'étend sur la largeur de la barrette (31) et qui dépasse du corps de base (36) dans la direction radiale.

13. Dispositif de battage (3) selon une des revendications 1 à 12, **caractérisé en ce que** le premier contre-batteur (4) et le second contre-batteur (5) comportent des pattes (20a, 20b, 20c) par l'intermédiaire desquelles le premier contre-batteur (7) et le second contre-batteur (8) sont reliés de manière articulée à des leviers doubles (21a, 21b, 21c) qui peuvent chacun pivoter autour d'un axe fixe (18, 19, 22) .

14. Dispositif de battage (3) selon une des revendications 1 à 12, **caractérisé en ce que** les équipements de traitement de produit récolté (29, 31, 34, 35) peuvent être actionnés indépendamment les uns des autres.
